# EUROPEAN PATENT SPECIFICATION

(11) **EP 2 623 175 B1**
(45) Date of publication and mention of the grant of the patent: **27.04.2016**
(21) Application number: 12153437.4
(22) Date of filing: 01.02.2012
(51) Int. Cl.: B01D 29/15, B01D 29/58, B01D 29/96, B01D 35/18, B01D 36/00

(54) **A serviceable filtration arrangement**
Wartbare Filtrationsanordnung
Agencement de filtration utilisable

(43) Date of publication of application: 07.08.2013
(73) Proprietor: Delphi International Operations Luxembourg S.à r.l., 4940 Bascharage (LU)
(72) Inventor: Frouin, Thierry, 41350 Vineuil (FR); Meunier, Cedric, 41000 Blois (FR); Vincent, Laurent, 41000 Saint Sulpice de Pommeray (FR); Daniel, Patrick, 41000 Blois (FR)
(74) Representative: Delphi France SAS

(56) References cited:
- DE-A1-102007 037 462
- US-A- 4 976 852
- US-A1- 2004 069 694
- US-A1- 2006 186 031
- US-A1- 2006 231 475

## Description

The present invention relates to a serviceable filtration arrangement. In particular, but not exclusively, the invention relates to a fuel filtration arrangement for a compression ignition, diesel, internal combustion engine wherein, in use, the fuel is supplied to the filtration under pressure, rather than the fuel being drawn into the fuel filtration arrangement by a downstream fuel pump. The fuel filtration arrangement protects the fuel injection system from being contaminated with potentially damaging substances, such as particulate debris, water and other contaminants, for the life of the vehicle, subject to servicing of the fuel filtration arrangement at intervals.

There is a trend to increase the pressure to which the fuel is pressurised by the diesel fuel injection equipment for injection into an engine. This increased injection pressure, and the associated technical features of the fuel injection apparatus, increase the risk that particulate debris, water, and other contaminants within the fuel can cause damage. There is therefore a greater need for cleanliness of the fuel injection system, both during manufacture of the filtration arrangement, during its initial fitment to a vehicle and throughout the life of the vehicle, particularly when the fuel filtration arrangement is being serviced. The risk of contamination of the fuel injection system is increased when the fuel filtration arrangement is placed in whole, or in part, in an environment that is particularly exposed to contaminants, such as the underneath of a vehicle. The vehicle manufacturer might be forced to place the fuel filtration arrangement in such an environment for a number of reasons, for example because of limited space in an engine bay. Also, the use of vehicles in countries in which the level of contaminants is relatively high increases the risk that the fuel injection equipment could be damaged.

Typically, it is now desirable for the fuel in the low pressure circuit to be supplied to the fuel filtration arrangement at a pressure of around 3 bar (it might be between 1 and 6 bar) by, for example, an electric lift pump (fuel injection equipment can be thought of as having a low pressure circuit between the fuel tank and the inlet to the high pressure fuel pump and a high pressure circuit between the outlet from the high pressure pump and the injector(s)). The use of an electric lift pump enables the fuel supplied from the tank to be matched to the engine demand and thus can increase the efficiency of the fuel system and thus the efficiency of the vehicle as a whole which consequently leads to a reduction in CO₂ emissions. The new use of pressurised low pressure fuel circuits presents new challenges to the filter designer. For example, the pressurisation of the fuel causes a significant reduction in the size of the water droplets held in emulsion in the fuel such that it is difficult to achieve good water separation using conventional single stage fuel filtration arrangements.

Furthermore, vehicle manufacturers desire a fuel filtration arrangement that is cheaper to service to reduce the cost to the owner of running the vehicle. Consequently, there is a desire to move away from current fuel filtration arrangements, for example disposable filtration units, which are replaced in their entirety at a service interval, towards the replacement only of the filtration media within a fuel filtration arrangement. One disadvantage of an arrangement in which the filtration media is replaced is that it opens up the filtration arrangement and thus can increase the risk of contaminants entering the fuel injection system, particularly when the filter is housed in certain environments, as discussed above.

US2006231475 and US 2006186031 disclose filters o fthe prior art. It is known to provide a two stage diesel fuel filter that has a first stage coalescent filtration media for coalescing small water droplets, that are emulsified in the fuel, into larger water droplets that can be more readily removed by a second stage, downstream, water separation media. One such filter is described in US patent publication US4976852 which is a filter for use with fuel injection equipment having an unpressurised low pressure circuit. However, this filter does not satisfy the requirement of reduced servicing cost, because at the service interval the whole 'spin-on' filter cartridge must be replaced. The filter cartridge contains both the outer and inner elements and thus is relatively expensive.

That filter and other prior art filters also do not address the issue of contamination risk when servicing the fuel system, because when the filter cartridge is unscrewed from the filter head the downstream, clean, fuel passage on the filter head is exposed to the external environment. Thus the fuel injection equipment downstream of the filter is exposed to potential contamination.

It is known to try to reduce the risk of any such contamination by the provision of a valve arrangement which closes automatically upon removal of a fuel filter cartridge from a fuel filter head and is only reopened upon inserting the new, replacement filter. However, such arrangements do not prevent contamination. They merely reduce the risk of contamination. For example, if either of the mating parts of the filter cartridge or filter head is contaminated during the servicing process then it is still possible for the contaminants to enter the fuel injection system when they are fitted together.

Consequently, there is a need for an improved fuel filtration arrangement which maintains during operation and servicing the cleanliness of the fuel injection system downstream of the fuel filtration arrangement, which is suitable for use with a pressurised low pressure circuit and which decreases the cost of the filter servicing operation.

According to a first aspect, the present invention provides a diesel fuel filtration arrangement for filtering diesel fuel in accordance with claim 1. The filter contains solid contaminants such as particulate debris, the filtration arrangement comprising a filter housing having a filter head, an outer coalescent filtration element replaceable independently of an inner water repellent filtration element. The outer coalescent filtration element is made from a coalescing material made from a depth filtration media consisting of a mass of randomly distributed fibres provided in a pleated arrangement, the coalescent depth filtration element acting to provide a tortuous path through removing 95% of particles of over 4microns in size. Also, the water repellent filtration element is made from a water repellent material made from a depth filtration media consisting of a mass of randomly distributed fibres provided in a pleated arrangement acting to provide a tortuous path through removing 95% of particles of over 4microns. Consequently, in use, the majority of the solid contaminants within the fuel is removed by the upstream filtration element, which is replaced at a service interval, with the result that the downstream filtration element is subjected to a much lower volume of solid contaminants such that it clogs at a much lower rate enabling the downstream filtration element (5) to remain permanently attached to the filter head for the life of the vehicle.

Both of the upstream filtration element and the downstream filtration element may comprise a depth filtration media.

Depth filtration media function differently to surface filtration media. Surface filtration media such as grids or meshes can be made with very accurately dimensioned orifices such that all particles over a certain size can be prevented from passing through. However, they clog quickly because they have a relatively small surface area, thus they need to be changed frequently and are unsuitable for use as a first stage filter in fuel injection equipment. Depth filtration media are constructed from a mass of randomly distributed particles with the result that they present a much larger surface area on which contaminants can be trapped. Consequently they clog much less quickly and can provide a service interval of many thousands of kilometres. Although, depth filtration media do not have the accurately dimensioned orifices of surface filtration media and so cannot guarantee that all particles of a particular size will be trapped they are able to remove a very high proportion of particulate debris, including particles of smaller size than those for which the media is rated,

In the case of the present invention the amount of debris passing reaching the fuel injectors is further reduced because there are two stages of depth filtration in series. The effect of this serial arrangement is that the efficiency of the depth filtration media is increased.

In the preferred embodiment of the present invention the upstream filtration element comprises a water coalescing media.

In the preferred embodiment of the present invention the downstream filtration element comprises a water separation media.

Preferably, there is provided a flow passage between an inlet connection and an outlet connection within which flow passage the upstream filtration element and the downstream filtration element are arranged in series such that the upstream filtration element can be removed from the flow passage whilst the downstream filtration element remains in place in the flow passage.

The filtration arrangement may comprise an ancillaries carrier provided with a fastening means for maintaining the downstream filtration element in place.

Preferably, the ancillaries carrier comprises at least one conductor. It is advantageous to locate the conductor on the ancillaries carrier for support purposes. Typically the conductor or conductors are used to detect the presence of water in the reservoir and provide a signal that indicates that the reservoir should be emptied.

In the preferred embodiment of the present invention the upstream filtration element and the downstream filtration element each form part of the same filtration unit.

Preferably the ancillaries carrier, the downstream filtration element, the upstream filtration element and a cap are arranged coaxially. This is advantageous for ease of assembly, both during initial manufacture and during servicing.
Figure 1 illustrates a first embodiment of a fuel filtration arrangement according to the present invention;
Figure 2 illustrates the fuel filter housing of the embodiment of Figure 1;
Figure 3 illustrates the ancillaries carrier of the embodiment of Figure 1;
Figure 4 illustrates the inner water repellent filtration element of Figure 1;
Figure 5 illustrates the outer coalescent filtration element of Figure 1; and
Figure 6 illustrates a second embodiment of a fuel filtration arrangement according to the present invention.

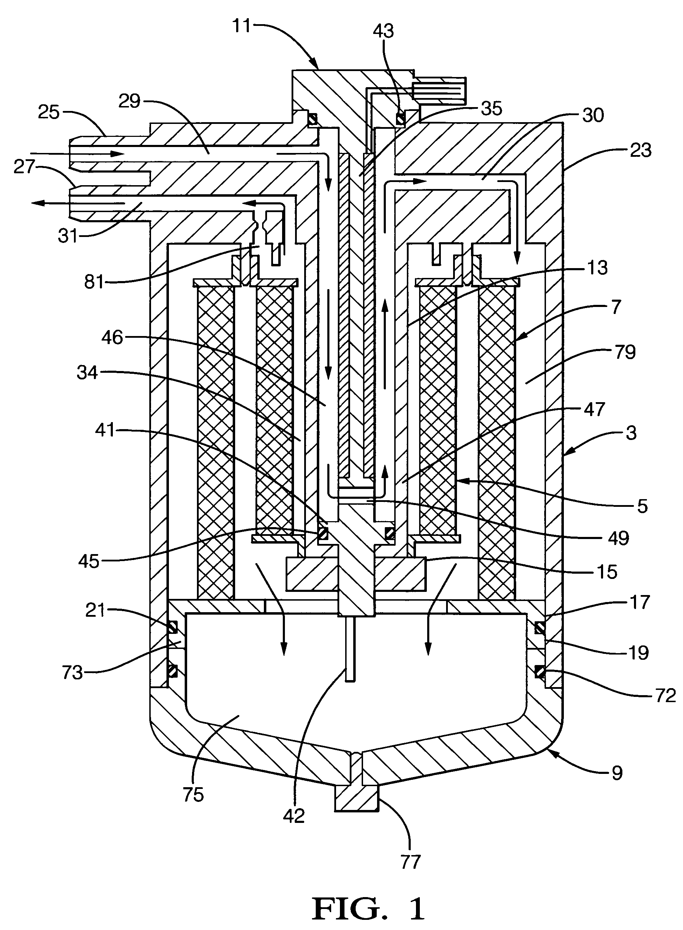

The diesel fuel filtration unit 1 of Figure 1 comprises a filter housing 3, an inner (downstream) water repellent depth filtration element 5, an outer (upstream) coalescent depth filtration element 7, a cap 9 and an ancillaries carrier 11.

The filtration unit 1 is assembled in the following manner. The ancillaries carrier 11 is passed through a tube 13 provided on the filter housing 3. The inner water repellent filtration element 5 is passed over the tube 13 and secured in place with a locking nut 15. The outer coalescent filtration element 7 is passed over the inner water repellent filtration member 5 and the cap 9 is screwed into the filter housing 3.

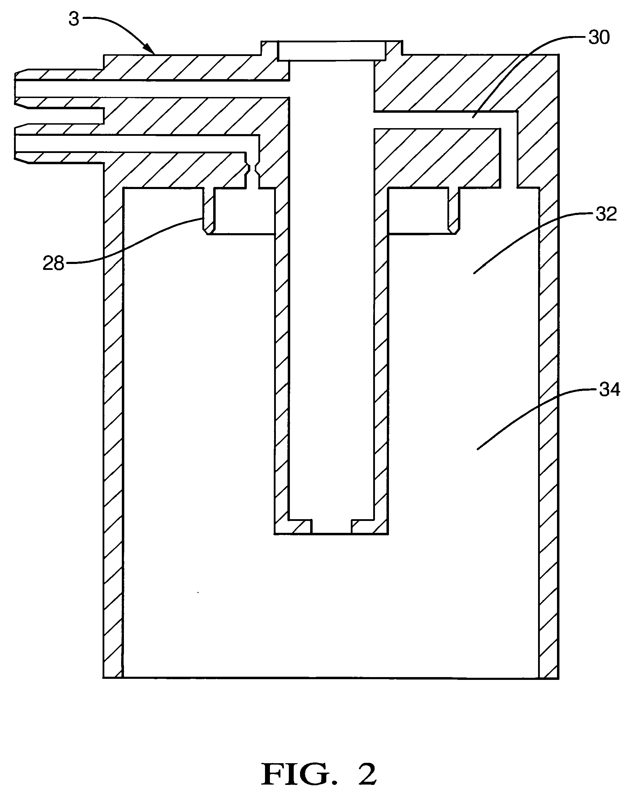

The filter housing 3, shown in Figure 2, is generally cylindrical. One end of the filter housing 3 is open and provided with a thread 17 for engagement with a complementary thread 19 on the cap 9. An O-ring seal 21 is provided to ensure that the connection is fluid tight. The other end of the filter housing 3 is provided with a filter head 23. The tube 13 protrudes perpendicularly from the filter head 23 into the body of the filter housing 3. The longitudinal axis of the tube 13 is co-axial with the longitudinal axis of the filter housing 3. A fuel inlet connection 25 and a fuel outlet connection 27 are located on the external surface of the filter head 23, for connection to external fuel lines. An upstream fuel inlet passage 29 passes through the filter head 23 from the fuel inlet connection to an opening into the tube 13. A downstream fuel inlet passage 30 passes through the filter head 23 from the tube 13 to an annular space 32 created between the internal wall of the filter housing 3 and the external surface of the coalescent filtration element 7. A fuel outlet passage 31 passes through the filter head 23 from an annular space 34 created between the tube 13 and the inner water repellent filtration element 5 and the fuel outlet connection 27. An annular filtration element attachment flange 28 extends perpendicularly from the inside surface of the filter head 23.

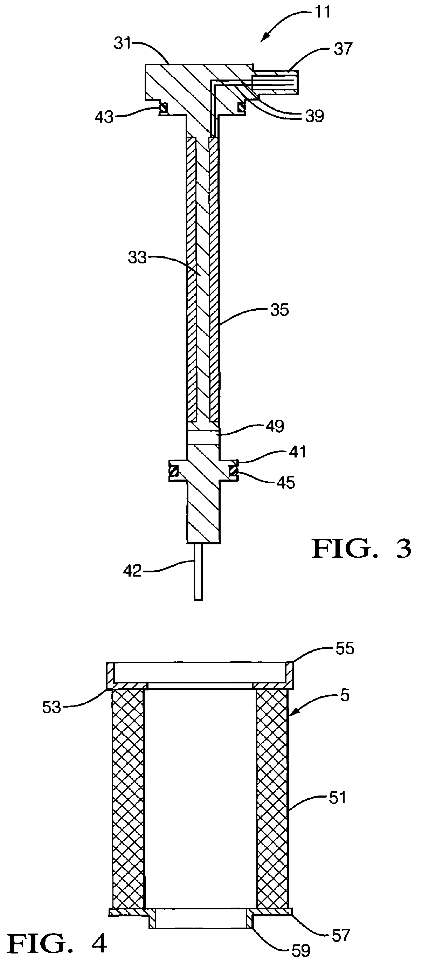

The ancillaries carrier 11, shown in Figure 3, comprises a carrier head 31 located at one end of a stem 33. A heating element 35 is provided on the stem. An electrical connection 37 is provided on the head and is electrically connected to the heating element 35 via conductors 39. At its other end the stem 33 is provided with a sealing foot 41. The ancillaries carrier 11 is also provided with an electrical probe 42, in the form of two conductors, which protrudes out from the foot 41 in a direction parallel to the longitudinal axis of the stem. The probe 42 is arranged so that it comes into contact with the water held in the cap 9 when the water reaches a level at which it needs to be drained from the filtration unit 1.

The ancillaries carrier 11 is installed into the filter 1 by passing it through the tube 13 in a direction from the outside to the inside of the filter 1. An O-ring 43 creates a seal between the carrier head 31 and the filter head 23. An O-ring 45 creates a seal between the foot 41 and the internal surface of the tube 13. When the ancillaries carrier 11 is installed into the filter 1 the internal volume 46 of the tube 13 is split into two halves, connected only by an orifice 49 which passes through the stem 33 and a location adjacent to the foot 41. This creates a flow passage for fuel from the fuel inlet passage 29, around the heating element 35, through the orifice 49 and out via the downstream fuel inlet passage 30.

The inner water repellent depth filtration element 5, shown in Figure 4, comprises a filtration media 51 arranged in a tubular form which has an annular cross-section. The filtration media 51 is made from a water repellent material provided in a pleated arrangement. An annular upper end plate 53 is located adjacent to the upper end of the water repellent depth filtration element 5, such that it covers the ends of the pleats of the filtration media 51 and is adhesively glued to them so that there is a liquid tight seal between the plate 53 and the filtration media 51. A flange 55 extends perpendicularly from the outer surface of the upper end plate 53, adjacent to its outer edge. An annular lower end plate 57 is located adjacent to the lower end of the water repellent depth filtration element 5 and is attached to the filtration media 51 in the same way as the upper end plate 53. A flange 59 extends perpendicularly from the outside surface of the lower end plate 57, adjacent to its inner edge. When the water repellent depth filtration element 5 is fitted onto the filter housing 3, the flange 55 engages with the flange 28 on the filter head 23 such that a seal is created between them, for example by an interference fit, a weld, or any other suitable means. The flange 59 abuts the external surface of the tube 13 and creates a seal.

The locking nut 15 is then attached to the foot 41 of the ancillaries carrier 11 and is tightened so as to clamp the ancillaries carrier 11 and the water repellent depth filtration element 5 in place and to create a further seal between the flange 59 and the locking nut 15.

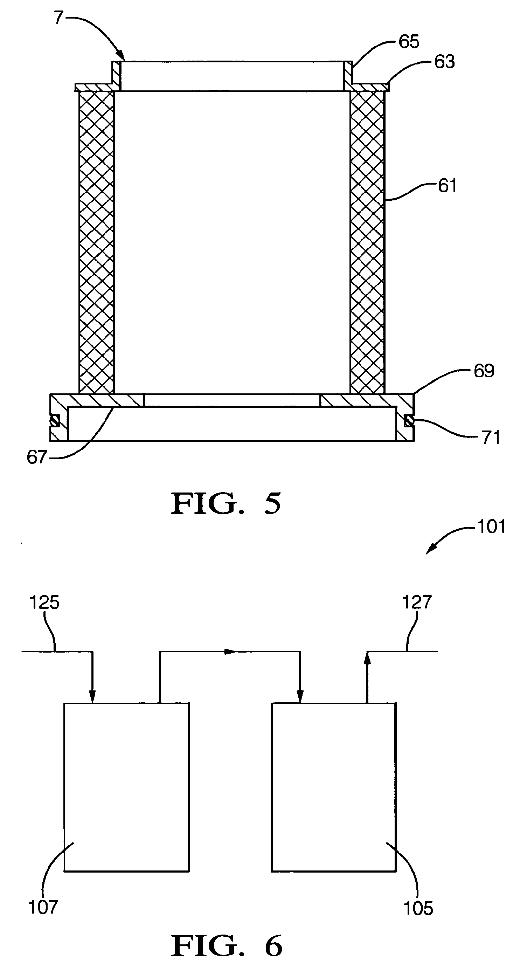

The outer coalescent depth filtration element 7, shown in Figure 5, comprises a filtration media 61 arranged in a tubular form which has an annular cross-section. The filtration media 61 is made from a coalescing material provided in a pleated arrangement. An annular upper end plate 63 is located adjacent to the upper end of the coalescent depth filtration element 7, such that it covers the ends of the pleats of the filtration media 61 and is adhesively glued to them so that there is a liquid tight seal between the plate 63 and the filtration media 61. A flange 65 extends perpendicularly from the outer surface of the upper end plate 63, adjacent to its inner edge. An annular lower end plate 67 is located adjacent to the lower end of the coalescent depth filtration element 7 and is attached to the filtration media 61 in the same way as the upper end plate 63. A flange 69 extends radially outwards from the filtration media 61 and is provided at its outer edge with an O-ring seal 71. When the coalescent depth filtration element 7 is fitted onto the filter housing 3, the flange 65 engages with the flange 28 on the filter head 23 such that a seal is created between them, for example by an interference fit, a weld, or any other suitable means. The flange 69 abuts the internal surface of the filter housing 3 and the O-ring seal 71 ensures a liquid tight seal between the flange 69 and the filter housing 3.

To close the filter the cap 9 is screwed into the filter housing 3. An O-ring seal 72 is provided on the cap 9 to create a liquid tight seal between the cap 9 and the filter housing 3. The upper surface 73 of the wall of the cap 9 abuts the flange 69 of the coalescent depth filtration element 7 and holds it in place, preventing it from moving axially relative to the filter housing 3. The cap 9 contains within it a reservoir 75 for the collection of water separated out by the water repellent depth filtration element 5. Water can be drained from the reservoir by unscrewing a drain plug 77 from the base of the cap 9. The fuel filtration unit 1 also comprises an air management system. Air rises to the top of the filter and collects in a chamber 81 on the radially inner side of the water repellent depth filtration element 5. The air is then released slowly into the outlet fuel stream in small bubbles, via a calibrated orifice 83.

In operation, fuel (more typically a mixture of fuel and contaminants) passes into the filtration unit 1 through the upstream fuel inlet passage 29. It then passes into the internal volume 46 of the tube 13 and is directed downwards past the heating element 35 and then through the orifice 49 before being directed back upwards towards the downstream fuel inlet passage 30. If necessary the temperature of the fuel is raised by the heating element 35 (for example to counteract any fuel waxing). The fuel then passes through the downstream fuel inlet passage 30 and enters an annular space 79 between the coalescent depth filtration element 7 and the internal wall of the filter housing 3. The fuel then flows around the annular space 79 and passes through the coalescent depth filtration element 7 in a radial direction, towards the centre of the fuel filtration unit 1. This first stage of filtration removes particulate matter from the fuel and causes any small water droplets in the fuel to coalesce into larger water droplets, such that they can be more readily removed during the second stage of filtration, as discussed below.

Upon passing to the second stage of filtration, the water repellent depth filtration element 5 separates the water droplets out from the fuel, as the fuel passes through it in a radial direction towards the centre of the filtration unit 1. Those water droplets then pass downwards through the filtration unit 1, passing through the opening in the annular end plate 67 of the coalescent filtration element 7 and being stored in the reservoir 75. The water repellent depth filtration element 5 will also separate out any particulate matter or other contaminants that remain in the fuel.

Once the fuel has passed through the water repellent depth filtration element 5 it enters an annular space 47 between it and the external surface of the tube 13. The fuel then flows upwards through the annular space 47 and exits the filter through the fuel outlet passage 31.

When the vehicle is being serviced the cap 9 is unscrewed from the filter housing, the used coalescent depth filtration element 7 is removed and a new coalescent depth filtration element 7 is fitted. The water repellent depth filtration element 5 remains in the filter housing 3. The cap 9 is then refitted to seal the filtration unit 1.

The water repellent depth filtration element 5 and the coalescent depth filtration element 7 are made from a depth filtration media which consists of a mass of randomly distributed fibres which act to provide a tortuous path through which the fuel and any contaminants must pass. The tortuous path permanently traps debris, for example particulate matter. Therefore, both the water repellent depth filtration element 5 and the coalescent depth filtration element 7 act to remove contaminants from the fuel. Water droplets are not permanently trapped in the coalescent depth filtration element 7. Instead, they pass through the filtration media, driven by the fuel flow. The deformable nature of the water droplets allows them to move along the tortuous paths. As the water droplets pass through the depth filtration media they coalesce with one another. Upon exiting from the coalescent depth filtration element 7, i.e. upon reaching the radially internal surface further coalescence takes place until the water droplets are large enough either to dislodge from the internal surface and sink downwards through the fuel into the reservoir 75 or are large enough to be entrained by the fuel such that they pass on to the radially external surface of the water repellent depth filtration element 5. In the latter case, the water repellent nature of the water repellent depth filtration element 5 causes the water droplets to sink downwards through the fuel into the reservoir 75.

The filtration efficiencies of the water repellent depth filtration element 5 and the coalescent depth filtration element 7 are selected such that the majority of the solid contaminants, e.g. particulate debris, is removed by the upstream coalescent filtration element 7, which is replaced at a service interval, with the result that the downstream water repellent depth filtration element 5 is subjected to a much lower volume of solid contaminants such that it clogs at a much lower rate. A rate which enables the water repellent filtration element 5 to remain permanently attached to the filter head 23 for the life of the vehicle.

Typically the filtration media 61 of the outer coalescent depth filtration element 7 will be chosen to remove 95% of particles of over 4 microns in size. Such a filtration media is referred to as having a Beta4=20. The filtration media 51 of the inner water repellent filtration element 5 might also be selected to have a Beta4=20. The first stage of filtration removes 95% of the particles and thus the second stage filtration, i.e. the inner water repellent filtration element is subjected to only 5% of the volume of contaminants. Consequently, it becomes clogged far less quickly and thus has a much extended life.

Particulate matter trapped in the filtration media will clog it and restrict the flow of fuel through the media such that the pressure drop across the filter increases. A filtration element will be considered to be clogged when the pressure drop across the filter exceeds a threshold.

## Claims

1. A diesel fuel filtration arrangement (1, 101) for filtering diesel fuel containing solid contaminants such as particulate debris, the filtration arrangement comprising a filter housing (3) having a filter head (23), an outer coalescent filtration element (7) replaceable independently of an inner water repellent filtration element (5) (5), **characterized in that**
the outer coalescent filtration element (7) comprises a filtration media (61) arranged in a tubular form with an annular cross section, the filtration media (61) being made from a coalescing material made from a depth filtration media consisting of a mass of randomly distributed fibres, the coalescent depth filtration element (7) acting to provide a tortuous path through which the fuel and any contaminants must pass removing 95% of particles of over 4microns in size and **in that**,
the water repellent filtration element (5) comprises a filtration media (51) arranged in a tubular form which has an annular cross section, the filtration media (51) being made from a water repellent material made from a depth filtration media consisting of a mass of randomly distributed fibres acting to provide a tortuous path through through which the fuel and any contaminants must pass removing 95% of particles of over 4microns, so that,
in use, the fuel flows through the coalescent depth filtration element (7) in a radial direction, towards the centre of the fuel filtration unit (1), this first stage of filtration removing particulate matter from the fuel and causing any small water droplets in the fuel to coalesce into larger water droplets, such that they can be more readily removed during the second stage of filtration where the water repellent depth filtration element (5) separates the water droplets out from the fuel, as the fuel passes through it in a radial direction towards the centre of the filtration unit (1),
the majority of the solid contaminants within the fuel being removed by the outer coalescent filtration element (7), which is replaced at a service interval, with the result that the water repellent filtration element (5) is subjected to a much lower volume of solid contaminants such that it clogs at a much lower rate enabling the water repellent filtration element (5) to remain permanently attached.

2. A filtration arrangement (1,101) as claimed in the preceding claim, comprising an ancillaries carrier (11) which is provided with a fastening means (15) for maintaining the downstream filtration element (5,105) in place.

3. A filtration arrangement (1,101) as claimed in any preceding claim, wherein the ancillaries carrier (11) comprises at least one conductor (42).

4. A filtration arrangement (1) as claimed in claim 3 wherein the ancillaries carrier (11), the downstream filtration element (5), the upstream filtration element (7) and a cap (9) are arranged coaxially.

5. A filtration arrangement (1) as claimed in any one of the preceding claims wherein,
the filtration media (51) made from a water repellent material is provided in a pleated arrangement, an annular upper end plate (53) being located adjacent to the upper end of the water repellent depth filtration element (5), such that it covers the ends of the pleats of the filtration media (51) and, an annular lower end plate (57) being located adjacent to the lower end of the water repellent depth filtration element (5) and being attached to the filtration media (51) and wherein,
the filtration media (61) made from a coalescing material is provided in a pleated arrangement, an annular upper end plate (63) being located adjacent to the upper end of the coalescent depth filtration element (7), such that it covers the ends of the pleats of the filtration media (61), an annular lower end plate (67) being located adjacent to the lower end of the coalescent depth filtration element (7) and being attached to the filtration media (61).

## Patentansprüche

1. Eine Dieselkraftstofffilteranordnung (1, 101) zum Filtern von Dieselkraftstoff, der feste Verunreinigungen enthält, wie partikelförmige Rückstände, wobei die Filteranordnung aufweist ein Filtergehäuse (3) mit einem Filterkopf (23), ein äußeres koaleszierendes Filterelement (7), das unabhängig von einem inneren wasserabweisenden Filterelement (5) (5) austauschbar ist, **dadurch gekennzeichnet, dass**
das äußere koaleszierende Filterelement (7) ein Filtermedium (61) aufweist, das in einer rohrförmigen Form mit einem ringförmigen Querschnitt angeordnet ist, wobei das Filtermedium (61) aus einem koaleszierenden Material besteht, das aus einem Tiefenfiltermedium besteht, bestehend aus einer Masse von zufällig verteilten Fasern, wobei das koaleszierende Tiefenfilterelement (7) wirkt zum Vorsehen eines gewundenen Pfads, durch den der Kraftstoff und jegliche Verunreinigungen durchgehen müssen zum Entfernen von 95% der Partikel einer Größe von mehr als 4 Mikrometer, und dadurch, dass
das wasserabweisende Filterelement (5) ein Filtermedium (51) aufweist, das in einer rohrförmigen Form angeordnet ist, die einen ringförmigen Querschnitt hat, wobei das Filtermedium (51) aus einem wasserabweisenden Material besteht, das aus einem Tiefenfiltermedium besteht, bestehend aus einer Masse von zufällig verteilten Fasern, die wirken zum Vorsehen eines gewundenen Pfads, durch den der Kraftstoff und jegliche Verunreinigungen durchgehen müssen zum Entfernen von 95% der Partikel von mehr als 4 Mikrometer, so dass in Betrieb, der Kraftstoff durch das koaleszierende Tiefenfilterelement (7) in einer radialen Richtung hin zu der Mitte der Kraftstofffiltereinheit (1) fließt, wobei die erste Filterstufe partikelförmige Teile aus dem Kraftstoff entfernt und veranlasst, dass kleine Wassertröpfchen in dem Kraftstoff in größere Wassertröpfchen koaleszieren derart, dass sie leichter während der zweiten Filterstufe entfernt werden können, wobei das wasserabweisende Tiefenfilterelement (5) die Wassertröpfchen aus dem Kraftstoff trennt, wenn der Kraftstoff dieses in einer radialen Richtung hin zu der Mitte der Filtereinheit (1) durchläuft,
die Mehrzahl der festen Verunreinigungen in dem Kraftstoff durch das äußere koaleszierende Filterelement (7) entfernt wird, das in einem Serviceintervall ausgetauscht wird, mit dem Ergebnis, dass das wasserabweisende Filterelement (5) einem viel geringeren Volumen von festen Verunreinigungen ausgesetzt ist derart, dass mit einer viel niedrigeren Rate verstopft, wodurch ermöglicht wird, dass das wasserabweisende Filterelement (5) permanent angebracht bleibt.

2. Eine Filteranordnung (1,101) gemäß dem vorhergehenden Anspruch, die einen zusätzlichen Träger (11) aufweist, der mit einem Befestigungsmittel (15) versehen ist zum Halten des stromabwärtigen Filterelements (5, 105) an der Stelle.

3. Eine Filteranordnung (1,101) gemäß einem vorhergehenden Anspruch, wobei der zusätzliche Träger (11) zumindest einen Leiter (42) aufweist.

4. Eine Filteranordnung (1) gemäß Anspruch 3, wobei der zusätzliche Träger (11), das stromabwärtige Filterelement (5), das stromaufwärtige Filterelement (7) und eine Kappe (9) koaxial angeordnet sind.

5. Eine Filteranordnung (1) gemäß einem der vorhergehenden Ansprüche, wobei,
das Filtermedium (51), das aus einem wasserabweisenden Material besteht, in einer gefalteten Anordnung vorgesehen ist, wobei eine ringförmige obere Endplatte (53) neben dem oberen Ende des wasserabweisenden Tiefenfilterelements (5) angeordnet ist derart, dass sie die Enden der Falten des Filtermediums (51) abdeckt, und eine ringförmige untere Endplatte (57) neben dem unteren Ende des wasserabweisenden Tiefenfilterelements (5) angeordnet ist und an dem Filtermedium (51) befestigt ist, und wobei,
das Filtermedium (61), das aus einem koaleszierenden Material besteht, in einer gefalteten Anordnung vorgesehen ist, wobei eine ringförmige obere Endplatte (63) neben dem oberen Ende des koaleszierenden Tiefenfilterelements (7) angeordnet ist derart, dass sie die Enden der Falten des Filtermediums (61) abdeckt, eine ringförmige untere Endplatte ( 67) neben dem unteren Ende des koaleszierenden Tiefenfilterelements (7) angeordnet ist und an dem Filtermedium (61) befestigt ist.

## Revendications

1. Agencement de filtration pour carburant diesel (1, 101) pour filtrer du carburant diesel contenant des contaminants solides tels que des débris de particules, l'agencement de filtration comprenant un boîtier de filtre (3) ayant une tête de filtre (23), un élément de filtration extérieur par coalescence (7) remplaçable indépendamment d'un élément de filtration intérieur hydrofuge (5), **caractérisé en ce que** l'élément de filtration extérieur par coalescence (7) comprend un média de filtration (61) agencé sous une forme tubulaire avec une section transversale annulaire, le média de filtration (61) étant réalisé d'un matériau coalescent réalisé à partir d'un média de filtration en profondeur constitué d'une masse de fibres distribuées de manière aléatoire, l'élément de filtration en profondeur par coalescence (7) ayant pour effet de présenter un trajet tortueux à travers lequel le carburant et tous les contaminants doivent passer, en supprimant 95 % des particules d'une taille supérieure à 4 microns, et **en ce que**
l'élément de filtration hydrofuge (5) comprend un média de filtration (51) agencé sous une forme tubulaire avec une section transversale annulaire, le média de filtration (51) étant réalisé d'un matériau hydrofuge réalisé à partir d'un média de filtration en profondeur constitué d'une masse de fibres distribuées de manière aléatoire ayant pour effet de présenter un trajet tortueux à travers lequel le carburant et tous les contaminants doivent passer, en supprimant 95 % des particules supérieures à 4 microns, de sorte que
en utilisation, le carburant s'écoule à travers l'élément de filtration en profondeur par coalescence (7) dans une direction radiale, vers le centre de l'unité de filtration de carburant (1), ce premier stade de filtration supprimant les matières en particules hors du carburant et amenant toute les petites gouttelettes d'eau dans le carburant à coalescer en donnant des gouttelettes d'eau de grande taille, de sorte qu'elles peuvent être plus aisément supprimées pendant le second stade de filtration dans lequel l'élément de filtration en profondeur hydrofuge (5) sépare les gouttelettes d'eau hors du carburant, alors que le carburant passe à travers celui-ci dans une direction radiale vers le centre de l'unité de filtration (1),
la majorité des contaminants solides à l'intérieur du carburant étant supprimés par l'élément de filtration extérieur par coalescence (7), qui est remplacé à intervalles d'entretien, avec pour résultat que l'élément de filtration hydrofuge (5) est soumis à un volume beaucoup plus faible de contaminants solides, de sorte qu'il se colmate à une vitesse beaucoup plus faible, permettant à l'élément de filtration hydrofuge (5) de rester attaché en permanence.

2. Agencement de filtration (1, 101) selon la revendication précédente, comprenant un support d'accessoires (11) qui est doté d'un moyen de fixation (15) pour maintenir l'élément de filtration aval (5, 105) en place.

3. Agencement de filtration (1, 101) selon l'une quelconque des revendications précédentes, dans lequel le support d'accessoires (11) comprend au moins un conducteur (42).

4. Agencement de filtration (1) selon la revendication 3, dans lequel le support d'accessoires (11), l'élément de filtration aval (5), l'élément de filtration amont (7) et un capuchon (9) sont agencés coaxialement.

5. Agencement de filtration (1) selon l'une quelconque des revendications précédentes, dans lequel
le média de filtration (51) réalisé en un matériau hydrofuge est prévu dans un agencement plissé, une plaque terminale supérieure annulaire (53) étant située adjacent à l'extrémité supérieure de l'élément de filtration en profondeur hydrofuge (5), de telle sorte qu'elle couvre les extrémités du plissage du média de filtration (51), et une plaque terminale inférieure annulaire (57) étant située adjacente à l'extrémité inférieure de l'élément de filtration en profondeur hydrofuge (5) et étant attachée au média de filtration (51), et dans lequel
le média de filtration (61) réalisé en un matériau coalescent est prévu dans un agencement plissé, une plaque terminale supérieure annulaire (63) étant située adjacente à l'extrémité supérieure de l'élément de filtration en profondeur par coalescence (7), de telle sorte qu'elle couvre les extrémités du plissage du média de filtration (61), une plaque terminale inférieure annulaire (67) étant située adjacente à l'extrémité inférieure de l'élément de filtration en profondeur par coalescence (7) et étant attachée au média de filtration (61).
